# EUROPÄISCHE PATENTANMELDUNG

(11) **EP 0 711 799 A2**
(43) Veröffentlichungstag der Anmeldung: **15.05.1996**
(21) Anmeldenummer: 95114692.7
(22) Anmeldetag: 19.09.1995
(51) Int. Cl.: C08J 9/34

(54) **Verfahren zur Herstellung von fluorchlorkohlenwasserstofffreien, Urethangruppen enthaltenden Formkörpern mit einem zelligen Kern und einer verdichteten Randzone**

(30) Priorität: 28.09.1994 DE 4434604
(71) Anmelder: BASF AKTIENGESELLSCHAFT, D-67056 Ludwigshafen (DE)
(72) Erfinder: Horn, Peter, Dr., D-69118 Heidelberg (DE); Denzinger, Walter, D-67346 Speyer (DE); Fuchs, Harald, Dr., D-48301 Nottuln (DE); Böhme, Ralf, D-67067 Ludwigshafen (DE)

(57) **Zusammenfassung**

Gegenstand der Erfindung ist ein Verfahren zur Herstellung von fluorchlorkohlenwasserstofffreien, Urethangruppen enthaltenden Formkörpern mit einem zelligen Kern und einer verdichteten Randzone mit einer im wesentlichen porenfreien Oberfläche, sogenannten Polyurethan(PU)-Integralschaumstoffen, durch Umsetzung der an sich bekannten Ausgangskomponenten in Gegenwart von Treibmitteln, Katalysatoren und mindestens einem Zusatzstoff aus der Gruppe der teilweise oder vollständig neutralisierten
(1) Homopolymeren aus monoethylenisch ungesättigten Monocarbonsäuren, Dicarbonsäuren oder deren inneren Anhydriden,
(2) Copolymeren aus
   (2i) monoethylenisch ungesättigten Monocarbonsäuren, Dicarbonsäuren oder deren inneren Anhydriden und
   (2ii) carboxylgruppenfreien, monoethylenisch ungesättigten mit (2i) copolymerisierbaren Monomeren und
(3) Copolymeren oder Pfropfcopolymeren aus
   (3i) monoethylenisch ungesättigten Monocarbonsäuren und/oder ihren Salzen,
   (3ii) monoethylenisch ungesättigten Dicarbonsäuren, ihren Salzen und/oder ihren inneren Anhydriden und
   (3iii) gegebenenfalls carboxylgruppenfreien, monoethylenisch ungesättigten, mit (3i) und (3ii) copolymerisierbaren Monomeren
   in einem geschlossenen Formwerkzeug unter Verdichtung.

## Beschreibung

Gegenstand der Erfindung ist ein Verfahren zur Herstellung von fluorchlorkohlenwasserstofffreien, Urethangruppen enthaltenden Formkörpern mit einem zelligen Kern und einer verdichteten Randzone mit einer im wesentlichen porenfreien Oberfläche, sogenannten Polyurethan(PU)-Integralschaumstoffen, durch Umsetzung von
a) organischen und/oder modifizierten organischen Polyisocyanaten mit
b) mindestens einer höhermolekularen Verbindung mit mindestens zwei reaktiven Wasserstoffatomen, vorteilhafterweise di- bis octafunktionellen Polyhydroxylverbindungen mit Molekulargewichten von 400 bis 8500 und gegebenenfalls
c) niedermolekularen Kettenverlängerungs- und/oder Vernetzungsmitteln
in Gegenwart von
d) Treibmitteln
e) Katalysatoren, und
f) mindestens einem Zusatzstoff (f) aus der Gruppe der teilweise oder vollständig neutralisierten
   f1) Homopolymeren aus monoethylenisch ungesättigten Monocarbonsäuren, Dicarbonsäuren oder deren inneren Anhydriden,
   f2) Copolymeren aus
      f2i) monoethylenisch ungesättigten Monocarbonsäuren, Dicarbonsäuren oder deren inneren Anhydriden und
      f2ii) carboxylgruppenfreien, monoethylenisch ungesättigten mit (f2i) copolymerisierbaren Monomeren
   f3) Copolymeren oder Pfropfcopolymeren aus
      (f3i) monoethylenisch ungesättigten Monocarbonsäuren und/oder ihren Salzen,
      (f3ii) monoethylenisch ungesättigten Dicarbonsäuren, ihren Salzen und/oder ihren inneren Anhydriden und
      (f3iii) gegebenenfalls carboxylgruppenfreien, monoethylenisch ungesättigten, mit (f3i) und (f3ii) copolymerisierbaren Monomeren
      in einem geschlossenen Formwerkzeug unter Verdichtung.
Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungs- und/oder Vernetzungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug ist seit langem bekannt und wird beispielsweise beschrieben in der DE-A-16 94 138 (GB 1 209 243), DE-C-19 55 891 (GB 1 321 679) und DE-B-17 69 886 (US 3 824 199).

Eine zusammenfassende Übersicht über derartige Formkörper, sogenannte Polyurethan-Integralschaumstoffe, wurde beispielsweise veröffentlicht in Kunststoff-Handbuch, Band 7, Polyurethane, herausgegeben von Dr. G. Oertel, Carl-Hanser-Verlag, München, Wien, 2. Auflage, 1983, Seiten 333ff. und in Integralschaumstoffe von Dr. H. Piechota und Dr. H. Röhr, Carl-Hanser-Verlag, München, Wien, 1975.

Obgleich die Herstellung von PU-Integralschaumstoff-Formkörpern eine außerordentliche technische Bedeutung erlangt hat, weisen die beschriebenen Verfahren aufgrund des gesteigerten Umweltbewußtseins hinsichtlich der verwendeten Treibmittel Mängel auf. Als Treibmittel werden weltweit in großem Maßstabe Fluorchloralkane, vorzugsweise Trichlorfluormethan, eingesetzt, die unter dem Einfluß der exothermen Polyadditionsreaktion zunächst verdampfen, danach bei erhöhtem Druck an der kühleren Innenwand des Formwerkzeugs partiell kondensiert und in den Formkörper eingelagert werden. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibmittel vorwiegend Wasser eingesetzt, das mit dem Polyisocyanat unter Kohlendioxidentwicklung reagiert, welches als eigentliches Treibgas wirkt. Nachteilig an diesem Verfahren ist, daß das gebildete Kohlendioxid unter den im Formwerkzeug vorliegenden Reaktionsbedingungen an der Werkzeuginnenfläche nicht kondensiert wird und so zur Bildung von Formkörpern mit einer porenhaltigen Oberfläche führt.

Nach Angaben der DE-A-1 804 362 (GB 1 285 224) können PU-Schaumstoffe mit einer kompakten Oberfläche und einem zelligen Kern unter Mitverwendung von Alkali-Aluminium-Silikaten mit Zeolithstruktur hergestellt werden. Als Treibmittel finden insbesondere Halogenkohlenwasserstoffe oder Mischungen aus Halogenkohlenwasserstoffen und partiell hydratisierten Alkali-Aluminium-Silikaten oder organische hydratwasserhaltige Verbindungen Verwendung. Durch den Zusatz von Wasser und der Alkali-Aluminium-Silikate sollten trotz der Mitverwendung von Fluorchlorkohlenwasserstoffen schrumpffreie PU-Integralschaumstoff-Formkörper mit Gesamtdichten bis 120 g/Liter hergestellt werden.

Fluorchlorkohlenwasserstofffreie, harte PU-Schaumstoff-Formteile mit einer hohen Oberflächenhärte und einer bei mindestens 300 kg/m³ liegenden Rohdichte werden in der EP-A-0 319 866 (US 4 882 363) beschrieben. Zu ihrer Herstellung finden Polyhydroxylverbindungen oder ein Gemisch organischer Polyhydroxylverbindungen mit einer mittleren Hydroxylfunktionalität von mindestens 2,2 und einer mittleren Hydroxylzahl von mindestens 300 mg KOH/g, als Treibmittel Wasser und/oder Kohlendioxid und als Zusatzmittel zeolithische Absorbentien mit einem Durchmesser der Porenöffnung zu den Absorptionshohlräumen von mindestens 0,7 nm Verwendung.

Ein Verfahren zur Herstellung von weichelastischen Polyurethan-Formkörpern mit einem zelligen Kern und einer kompakten Randzone nach der RIM-Technik wird in der EP-A-0 482 476 (US-A-5 110 834) beschrieben. Als Zusatzmittel werden kristalline, mikroporöse Molekularsiebe und/oder kristallines Siliciumdioxid verwendet. Obgleich nach diesem Verfahren Formkörpern mit guten mechanischen Eigenschaften und einer im wesentlichen porenfreien, glatten Oberfläche erhalten werden, weist das Verfahren auch Nachteile auf. Nachteilig ist z.B. die schwierige und technisch aufwendige Herstellung der mikroporösen, kristallinen Molekularsiebe und des Siliciumdioxids und die beträchtliche Menge an diesen Zusatzstoffen, die der Polyurethanformulierung einverleibt werden muß, um Polyurethanformkörper mit der gewünschten kompakten Randzone und einer im wesentlichen porenfreien Oberfläche zu erzielen.

Nach Angaben der EP-A-0 513 573 können zur Herstellung von weichelastischen, halbharten oder harten Polyurethan-Formkörpern mit einer integralen Dichteverteilung und einer im wesentlichen porenfreien, glatten Oberfläche als Zusatzstoff amorphe, mikroporöse Kieselgele verwendet werden. Obgleich die hergestellten Formkörper ausgezeichnete mechanische Eigenschaften besitzen, bereitet ihre Herstellung in Großserien zur Zeit gewisse Schwierigkeiten hinsichtlich der Konstanz des Raumgewichts und der Katalyse.

Verfahren zur Herstellung von weichelastischen, halbharten oder harten PU-Formkörpern mit einer integralen Dichteverteilung und einer im wesentlichen porenfreien, glatten Oberfläche werden ferner in der EP-A-0 545 175 (US-A-5 254 597) und EP-A-0 364 854 (CA-A-2 000 019) beschrieben. Da nach dem Verfahren nach EP-A-0 545 175 als Zusatzstoffe mikroporöse Aktivkohle und/oder mikroporöse Kohlenstoffmolekularsiebe verwendet werden, können nur schwarz eingefärbte Formkörper hergestellt werden. Nachteilig an dem Verfahren gemäß EP-A-0 364 854 ist hingegen der Einsatz von brennbaren (Cyclo)alkanen mit 4 bis 8 C-Atomen als Treibmittel, die eine Herstellung der Formkörper in kostspieligen ex-geschützten Räumen erforderlich macht.

Auch die Verwendung von Aceton als Treibmittel nach Angaben der DE-A-42 03 754 erfordert ex-geschützte Räume zur Verarbeitung der acetonhaltigen, schaumfähigen Reaktionsmischung. Nachteilig ist ferner, daß bei Verwendung von Aceton-Wassergemischen als Treibmittel, insbesondere bei der Herstellung von niedrigdichten PU-Hartintegralschaumstoff-Formkörpern, die Ausbildung der Formkörperoberfläche nicht immer den Erfordernissen bezüglich ihrer technischen Verwendung entspricht. Dieser Nachteil kann für bestimmte technische Anwendungen der Formkörper auch nicht durch die Verwendung von tertiären Alkoholen, gegebenenfalls in Verbindung mit Wasser, als Treibmittel nach EP-A-0 463 479 (US-A-5 189 068) vollständig beseitigt werden.

Die Aufgabe der vorliegenden Erfindung bestand darin, die vorgenannten Nachteile der bekannten Verfahren zumindest zu vermindern oder möglichst vollständig zu beseitigen und ein verbessertes Verfahren zur Herstellung von Urethangruppen enthaltenden Formkörpern mit einer im wesentlichen porenfreien glatten Oberfläche, die vorzugsweise aus halbharten oder insbesondere harten PU-Integralschaumstoffen bestehen, zu entwickeln. Geeignete, gegebenenfalls verstärkend wirkende, Füllstoffe enthaltende PU-Formulierungen zu ihrer Herstellung sollten leicht handhabbar, gut fließfähig und auch in Abwesenheit von Fluorchlorkohlenwasserstoffen (FCKW), die als Verdünnungsmittel wirken, nach der RIM- oder Niederdrucktechnik gut verarbeitbar sein.

Diese Aufgabe konnte überraschenderweise gelöst werden durch die Mitverwendung von speziellen Homopolymeren und/oder Copolymeren und/oder Pfropfcopolymeren aus ethylenisch ungesättigten Carbonsäuren oder Carbonsäurederivaten als Zusatzstoff zur Herstellung der PU-Integralschaumstoff-Formkörper.

Gegenstand der Erfindung ist somit ein Verfahren zur Herstellung von FCKW-freien, Urethangruppen enthaltenden Formkörpern mit einem zelligen Kern und einer verdichteten Randzone durch Umsetzung von
a) organischen Polyisocyanaten, modifizierten organischen Polyisocyanaten oder Mischungen aus organischen und modifizierten organischen Polyisocyanaten mit
b) mindestens einer höhermolekularen Verbindung mit mindestens zwei reaktiven Wasserstoffatomen, vorzugsweise höhermolekularen Polyhydroxylverbindungen und gegebenenfalls
c) niedermolekularen Kettenverlängerungsmitteln, Vernetzungsmitteln oder Mischungen aus Kettenverlängerungs- und Vernetzungsmitteln
in Gegenwart von
d) Treibmitteln,
e) Katalysatoren und
f) mindestens einem Zusatzstoff
   in einem geschlossenen Formwerkzeug unter Verdichtung, das dadurch gekennzeichnet ist, daß der Zusatzstoff (f) ausgewählt ist aus der Gruppe der
   f1) Homopolymeren, die teilweise oder vollständig neutralisiert sind und erhältlich sind durch Polymerisation von monoethylenisch ungesättigten Monocarbonsäuren, Dicarbonsäuren oder ihren Salzen oder inneren Anhydriden,
   f2) Copolymeren, die teilweise oder vollständig neutralisiert sind und erhältlich sind durch Copolymerisation von
      f2i) monoethylenisch ungesättigten Monocarbonsäuren, Dicarbonsäuren oder ihren Salzen oder inneren Anhydriden und
      f2ii) carboxylgruppenfreien, monoethylenisch ungesättigten, mit (f2i) copolymerisierbaren Monomeren und
   f3) Copolymeren oder Pfropfcopolymeren, die teilweise oder vollständig neutralisiert sind und erhältlich sind durch Copolymerisation oder Pfropfcopolymerisation von
      f3i) monoethylenisch ungesättigten Monocarbonsäuren oder ihren Salzen oder Mischungen davon,
      f3ii) monoethylenisch ungesättigten Dicarbonsäuren, ihren Salzen oder ihren inneren Anhydriden oder Mischungen aus mindestens 2 der genannten Monomeren (f3ii) und
      f3iii) gegebenenfalls mindestens einem carboxylgruppenfreien, monoethylenisch ungesättigten mit (f3i) und (f3ii) copolymerisierbaren Monomeren.

Durch den Zusatz der erfindungsgemäß verwendbaren Homopolymeren (f1) und/oder Copolymeren (f2) und/oder (Pfropf)copolymeren (f3) aus monoethylenisch ungesättigten Carbonsäuren und gegebenenfalls carboxylgruppenfreien, copolymerisierbaren, monoethylenisch ungesättigten Monomeren können in Kombination mit bekannten Treibmitteln, z.B. den obengenannten (Cyclo)alkanen und/oder insbesondere Wasser, in Abwesenheit von Fluorchlorkohlenwasserstoffen, PU-Integralschaumstoffe, vorzugsweise halbharte und harte PU-Integralschaumstoffe, zweckmäßigerweise solche mit relativ geringen Gesamtdichten von z.B. 200 bis 300 kg/m³ mit einer stark ausgeprägten Randzone, ausgezeichneten Oberfläche und hervorragenden mechanischen Eigenschaften hergestellt werden. Ein anderer Vorteil zeigt sich in der guten Verarbeitbarkeit von verstärkend wirkende Füllstoffe enthaltenden schaumfähigen Reaktionsmischungen. Verstärkungsmittel, wie z.B. Ruß, Wollastonit, Kurzglas-, Naturfasern, Glaskugeln u.a. können beispielsweise der Reaktionsmischung einverleibt werden oder das Formwerkzeug kann mit Matten oder Vliesen aus Glas-, Natur- oder Synthesefasern oder Endlosfasern aus derartigen Werkstoffen beschickt werden, ohne daß dadurch die glatte Oberfläche der PU-Integralschaumstoff Formkörper geschädigt wird. Auf diese Weise hergestellte PU-Integralschaumstoff-Verbundmaterialien eröffnen völlig neue Anwendungsgebiete, beispielsweise in der Fahrzeugtechnik, z.B. dem Flugzeug-, Automobil-, Schiffs- und Waggonbau, in der Möbelindustrie oder dem Apparatebau.

Zur Herstellung der FCKW-freien PU-Integralschaumstoff-Formkörper nach dem erfindungsgemäßen Verfahren können die an sich bekannten Ausgangsstoffe (a) bis (f) in Verbindung mit den erfindungsgemäß verwendbaren Homopolymerisaten (f1) und Copolymerisaten (f2) und (f3) sowie Pfropfcopolymerisaten (f3) als Zusatzstoff (f) verarbeitet werden. Im einzelnen möchten wir zu den vorteilhafterweise verwendbaren Ausgangsstoffen folgendes ausführen:
a) Als organische Polyisocyanate (a) kommen aliphatische, cycloaliphatische und vorzugsweise aromatische mehrwertige Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, 2-Butyl-2-ethyl-pentamethylen-diisocyanat-1,5, Tetramethylen-diisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate, wie z.B. 1,4-Xylylen-diisocyanat und Xylylen-diisocyanat-Isomerenmischungen und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'- und gegebenenfalls 2,2'-Diphenylmethan-diisocyanaten, Polyphenyl-polymethylen-polyisocanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 4200 modifiziertes 4,4'-Diphenylmethan-diisocyanat oder 2,4- und/oder 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten, wie z.B. 2,4'-, 4,4'-Diphenylmethan-diisocyanat, Roh-MDI, 2,4- und/oder 2,6-Toluylen-diisocyanat gegebenenfalls gemischt werden. Sehr gut geeignet sind z.B. Mischungen aus mit Urethangruppen modifizierten Diphenylmethan-diisocyanaten und Toluylen-diisocyanaten und/oder Roh-MDI.
   Besonders bewährt haben sich als organische Polyisocyanate und kommen daher vorzugsweise zur Herstellung der weichelastischen oder halbharten Polyurethan-Integralschaumstoff-Formkörper zur Anwendung:
   NCO-Gruppen enthaltende Prepolymere mit einem NCO-Gehalt von 25 bis 9 Gew.-%, insbesondere auf Basis von Polyether- oder Polyester-polyolen und einem oder mehreren Diphenylmethandiisocyanat-Isomeren, vorteilhafterweise 4,4'-Diphenylmethandiisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethandiisocyanat oder Diphenylmethan-diisocyanat-Isomerengemischen, Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI. Die aromatischen Polyisocyanate, modifizierten aromatischen Polyisocyanate oder Polyisocyanatmischungen besitzen zweckmäßigerweise eine durchschnittliche Funktionalität von 2 bis 2,6 und vorzugsweise 2 bis 2,4. Zur Herstellung der harten Polyurethan-Integralschaumstoff-Formkörper finden vorzugsweise mit Urethangruppen modifizierte aromatische Polyisocyanate einer Funktionalität von größer als 2,6, zweckmäßigerweise von 2,8 bis 3,5 und insbesondere Roh-MDI Verwendung.
   Sofern für spezielle Anwendungsgebiete Formkörper mit lichtbeständiger Oberfläche, wie z.B. für Verkehrsmittelinnenauskleidungen gefordert werden, werden zu ihrer Herstellung bevorzugt aliphatische oder cycloaliphatische Polyisocyanate, insbesondere modifizierte Polyisocyanate auf der Grundlage von Hexamethylen-diisocyanat-1,6 oder Isophoron-diisocyanat oder Gemische der genannten Diisocyanate gegebenenfalls mit Diphenylmethan-diisocyanat- und/oder Toluylen-diisocyanat-Isomeren verwendet.
b) Als höhermolekulare Verbindungen (b) mit mindestens zwei reaktiven Wasserstoffatomen werden zweckmäßigerweise solche mit einer Funktionalität von 2 bis 8 und einem Molekulargewicht von 400 bis 8500 verwendet, wobei zur Herstellung von weichelastischen und halbharten Polyurethan-Integralschaumstoff-Formkörpern die höhermolekularen Verbindungen (b) eine Funktionalität von vorzugsweise 2 bis 3 und insbesondere 2,0 bis 2,6 und ein Molekulargewicht von vorzugsweise 1800 bis 6000 und insbesondere 2000 bis 5000 besitzen und zur Herstellung von harten Polyurethan-Integralschaumstoff-Formkörpern solche mit einer Funktionalität von vorzugsweise 3 bis 8 und insbesondere 3 bis 6 und einem Molekulargewicht von vorzugsweise 400 bis 3200, insbesondere 600 bis 2400 Anwendung finden. Besonders bewährt haben sich Polyhydroxylverbindungen mit den vorgenannten Funktionalitäten und Molekulargewichten, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymer-modifizierten Polyether-polyole oder Mischungen aus mindestens zwei der genannten Polyhydroxylverbindungen. Vorzugsweise Anwendung finden Polyester-polyole und/oder insbesondere Polyether-polyole.
   Insbesondere bevorzugt sind als höhermolekulare Verbindungen (b) Mischungen aus Polyhydroxylverbindungen, vorzugsweise Polyether-polyolen, mit einem Molekulargewicht von 400 bis 8500, die mindestens eine difunktionelle Polyhydroxylverbindung, vorzugsweise ein difunktionelles Polyether-polyol, und mindestens eine tri- bis octa-funktionelle Polyhydroxylverbindung, vorzugsweise ein tri- bis octa-funktionelles Polyether-polyol enthalten, wobei die Mischungen zur Erzielung einer optimalen Formkörperoberfläche zweckmäßigerweise, bezogen auf das Gesamtgewicht der Mischung, 5 bis 40 Gew.-%, vorzugsweise 15 bis 30 Gew.-% der difunktionellen Polyhydroxylverbindung enthalten. Als solche difunktionelle Polyhydroxylverbindungen bevorzugt verwendet werden z.B. Polyoxypropylen-glykole oder Polyoxypropylen-polyoxyethylenglykole mit Molekulargewichten von beispielsweise 400 bis 2200, Polyoxytetramethylen-glykole mit Molekulargewichten von beispielsweise 400 bis 4000, Polyester-diole, z.B. Polycaprolactone oder Polyoxytetramethylencarbonate, mit Molekulargewichten von beispielsweise 1000 bis 4000 und Polybutadiendiole mit Molekulargewichten von beispielsweise 1800 bis 3000.
   Als höhermolekulare Verbindungen (b) verwendbar sind ferner Polyoxyalkylen-polyamine, vorteilhafterweise Polyoxyalkylendiamine und/oder -triamine mit den vorgenannten Molekulargewichten oder Mischungen aus derartigen Polyoxyalkylen-polyaminen und Polyhydroxylverbindungen, vorzugsweise Polyetherpolyolen.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Diole und Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythrit. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Diole, insbesondere Mischungen aus 1,4-Butandiol, 1,5-Pentandiol und 1,6-Hexandiol und/oder Glycerin. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3, insbesondere 2 bis 2,6 und ein Molekulargewicht von 1200 bis 3600, vorzugsweise 1500 bis 3000 und insbesondere 1800 bis 2500.
   Insbesondere als Polyhydroxylverbindungen verwendet werden jedoch Polyether-polyole, die nach bekannten Verfahren, beispielsweise durch anionische Polymerisiation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 8, vorzugsweise 2 oder 3 reaktive Wasserstoffatome für Polyether-polyole zur Herstellung von halbharten und weich-elastischen PU-Integralschaumstoff-Formkörpern und vorzugsweise 3 bis 8, insbesondere 3 bis 6 reaktive Wasserstoffatome für Polyether-polyole zur Herstellung von harten PU-Integralschaumstoff-Formkörpern gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Alkyl-alkanolamine, beispielsweise N-Methyl- und N-Ethyl-ethanolamin, Dialkanolamine, wie z.B. Diethanolamin, N-Alkyl-dialkanolamine, beispielsweise N-Methyl- und N-Ethyl-diethanolamin und Trialkanolamine, wie z.B. Triethanolamin und Ammoniak. Vorzugsweise verwendet werden mehrwertige, insbesondere zwei- und/oder dreiwertige Alkohole und/oder Dialkylenglykole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose oder Mischungen aus mindestens zwei mehrwertigen Alkoholen und gegebenenfalls zusätzlich Wasser.
   Die Polyether-polyole, vorzugsweise Polyoxypropylen- und Polyoxypropylen-polyoxyethylen-polyole, besitzen, wie bereits ausgeführt wurde, eine Funktionalität von 2 bis 8 und Molekulargewichte von 400 bis 8500, und geeignete Polyoxytetramethylen-glykole ein Molekulargewicht bis ungefähr 4000, vorzugsweise von 600 bis 2200.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert. Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden, wobei Mischungen aus difunktionellen und mindestens trifunktionellen Polyether-polyolen oder Polyester-polyolen bevorzugt sind. Ferner können sie mit den polymermodifizierten Polyether-polyolen oder Polyester-polyolen sowie den hydroxylgruppenhaltigen Polyesteramiden, Polyacetalen, Polycarbonaten und/oder Polyoxyalkylen-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Trioxyethylenglykol oder Tetraoxyethylenglykol mit Diarylcarbonaten, z.B. Diphenylcarbonat, oder Phosgen hergestellt werden können.
   Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US-A-3 267 050) oder die teilweise oder vollständige Aminierung von Polyoxyalkylen-polyolen mit Aminen oder Ammoniak in Gegenwart von Wasserstoff und Katalysatoren (DE-A-12 15 373).
   Die Urethangruppen enthaltenden, weichelastischen und vorzugsweise halbharten oder harten Formkörper mit verdichteter Randzone und zelligem Formkörperkern können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden z.B. niedermolekulare, mehrwertige Alkohole, vorzugsweise Diole und/oder Triole, mit Molekulargewichten kleiner als 400, vorzugsweise von 60 bis 300. In Betracht kommen als Kettenverlängerungsmittel beispielsweise aliphatische, cycloaliphatische und/oder araliphatische Diole, wie z.B. Alkandiole und/oder Dialkylenglykole, mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6 und Bis-(2-hydroxyethyl)-hydrochinon, und als Vernetzungsmittel beispielsweise Triole, wie z.B. 1,2,4-, 1,3,5-Trihydroxycyclohexan, Trimethylolethan, Glycerin und Trimethylolpropan und 4- bis 8-wertige Alkohole, wie z.B. Pentaerythrit, Sorbit und Sucrose sowie niedermolekulare hydroxylgruppenhaltige Polyalkylenoxide, z.B. mit Molekulargewichten bis 400, auf Basis Ethylen- und/oder 1,2-Propylenoxid und den vorgenannten zur Polyether-polyolherstellung genannten Startermolekülen.
   Als Kettenverlängerungsmittel eignen sich ferner N,N'-dialkylsubstituierte, aromatische Diamine, die gegebenenfalls am aromatischen Rest durch Alkylgruppen substituiert sein können, mit 1 bis 20, vorzugsweise 1 bis 4 Kohlenstoffatomen im N-Alkylrest, wie z.B. N,N'-Diethyl-, N,N'-Di-sek.-pentyl-, N,N'-Di-sek. hexyl-, N,N'-Dicyclohexyl-p- bzw. -m-phenylendiamin, N,N'-Dimethyl-, N,N'-Diethyl-, N,N'-Diisopropyl-, N,N'-Di-sek.butyl- und N,N'-Dicyclohexyl-4,4'-diamino-diphenylmethan und N,N'-Di-sek.butylbenzidin.
   Als Kettenverlängerungs- oder Vernetzungsmittel in Betracht kommen ferner Polyoxyalkylen-polyole mit einer Funktionalität von 2 bis 4 und einem Molekulargewicht bis 400, die hergestellt werden durch Polyaddition von Ethylenoxid, 1,2-Propylenoxid oder Mischungen aus Ethylenoxid und 1,2-Propylenoxid an mindestens ein Startermolekül der Formel 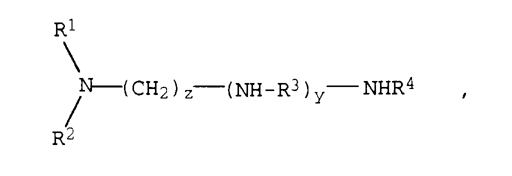 in der bedeuten
   - R¹ und R²: gleiche oder verschiedene, lineare oder verzweigte C₁- bis C₄-Alkylreste,
   beide Reste gemeinsam einen C₄- bis C₆-Cycloalkylenrest, der anstelle einer Methylengruppe ein -O- oder -NR⁵-Brückenglied enthalten kann, in dem R⁵ ein C₁- bis C₄-Alkylrest ist, oder
   gleiche oder verschiedene Dialkylaminoalkylreste der Formel 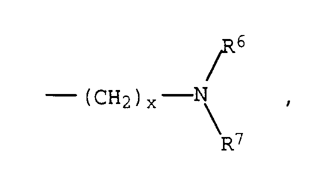 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann und x eine ganze Zahl von mindestens 3 ist,
   - z: eine ganze Zahl von mindestens 3,
   - R³: eine C₂- bis C₄-Alkylengruppe,
   - y: null oder eine Zahl von 1 bis 3 und
   - R⁴: Wasserstoff oder einen C₁- bis C₄-Alkylrest mit der Maßgabe, daß für y gleich null R⁴ Wasserstoff ist.

   Startermoleküle dieser Art sind beispielsweise N,N-Dimethyldiaminopropan-1,3, N,N-Dimethyl-diaminobutan-1,4, N,N-Dimethyl-dipropylen-triamin und N,N-Di-tert.butyl-diaminopropan-1,3.
   Sofern die Verbindungen der Komponente (c) mitverwendet werden, können diese in Form von Mischungen oder einzeln eingesetzt werden und werden vorteilhafterweise in Mengen von 1 bis 50 Gew.-Teilen, vorzugsweise von 3 bis 40 Gew.-Teilen, bezogen auf 100 Gew.-Teile der höhermolekularen Verbindungen (b), angewandt.
d) Als Treibmittel (d) findet vorzugsweise Wasser Verwendung, das mit den organischen, gegebenenfalls modifizierten Polyisocyanaten (a) unter Bildung von Kohlendioxid und Aminogruppen reagiert, die ihrerseits mit Polyisocyanaten (a) zu Harnstoffgruppen weiterreagieren und dadurch die Druckfestigkeit der PU-Integralschaumstoff-Formkörper beeinflussen können. Da die erfindungsgemäß als Zusatzstoff (f) verwendbaren Homopolymeren (f1), Copolymeren (f2) und (f3) und Pfropfcopolymeren (f3) aufgrund der Herstellungsart bis zu 20 Gew.-%, vorzugsweise 0,01 bis 15 Gew.-% und insbesondere 0,5 bis 12 Gew.-% Wasser, bezogen auf das Gesamtgewicht, aufweisen können, bedarf es vielfach keiner separaten Wasserzugabe zu den Aufbaukomponenten (b) und gegebenenfalls (c) oder der Reaktionsmischung. Sofern jedoch der Polyurethan-Formulierung zusätzlich Wasser einverleibt werden muß zur Erzielung des gewünschten Raumgewichts, wird dieses üblicherweise in Mengen von 0,05 bis 5 Gew.-%, vorzugsweise von 0,1 bis 3 Gew.-% und insbesondere von 0,1 bis 1 Gew.-%, bezogen auf das Gewicht der Aufbaukomponente (a) bis (c) verwendet.
   Als Treibmittel (d) können anstelle von Wasser oder vorzugsweise in Kombination mit Wasser und den erfindungsgemäß verwendbaren Homopolymeren (f1), Copolymeren (f2) und (f3) und Pfropfcopolymeren (f3) als erfindungswesentlicher Zusatzstoff (f) auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase eingesetzt werden.
   Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert.-Butylmethylether, Cycloalkylenether, wie z.B. Furan, Ketone, wie z.B. Aceton, Methylethylketon, Carbonsäureester, wie z.B. Ethylacetat, Methylformiat und Ethylen-Acrylsäuretertiärbutylester, tertiäre Alkohole, wie z.B. tertiär Butanol, Carbonsäuren wie z.B. Ameisensäure, Essigsäure und Propionsäure, Fluoralkane, die in der Trophosphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase wie z.B. Helium, Neon und Krypton.
   Als Treibmittel geeignet sind ferner Salze, die sich thermisch zersetzen, wie z.B. Ammoniumbicarbonat und/oder Ammoniumcarbamat oder Verbindungen, die in situ solche Salze bilden, wie z.B. wäßriger Ammoniak und/oder Amine und Kohlendioxid, und Ammoniumsalze organischer Carbonsäuren, wie z.B. die Monoammoniumsalze der Malonsäure oder Borsäure.
   Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsgemische eingesetzt werden können, hängt ab von der Dichte, die man erreichen will und der eingesetzten Menge an Wasser und Homopolymerisat (f1) und/oder vorzugsweise Copolymerisat (f2) und/oder (Pfropf)copolymerisat (f3). Die erforderlichen Mengen können durch einfache Handversuche leicht ermittelt werden. Zufriedenstellende Ergebnisse liefern üblicherweise Feststoffmengen von 0,5 bis 30 Gew.-Teilen, vorzugsweise von 2 bis 15 Gew.-Teilen, Flüssigkeitsmengen von 1 bis 15 Gew.-Teilen, vorzugsweise von 3 bis 12 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (b) und gegebenenfalls (c). Die Gasbeladung mit z.B. Luft, Kohlendioxid, Stickstoff und/oder Helium kann sowohl über die höhermolekularen Verbindungen (b) und gegebenenfalls niedermolekularen Kettenverlängerungs- und/oder Vernetzungsmitteln (c) als auch über die Polyisocyanate (a) oder über (a) und (b) und gegebenenfalls (c) erfolgen.
   Als Treibmittel keine Anwendung finden, wie bereits ausgeführt wurde, Perfluorchlorkohlenwasserstoffe.
e) Als Katalysatoren (e) zur Herstellung der Formkörper mit einer verdichteten Randzone und einem zelligen Kern werden insbesondere Verbindungen verwendet, die die Reaktion der Hydroxylgruppen enthaltenden Verbindungen der Komponente (b) und gegebenenfalls (c) mit der organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Als gut geeignet haben sich auch Dialkylzinn(IV)-mercaptoverbindungen erwiesen, wie z.B. Bislaurylzinn(IV)-dimercaptid, und Verbindungen der allgemeinen Formeln R₂Sn(SR'-O-CO-R'')₂ oder R₂Sn(SR'-CO-OR'')₂, in denen R einen Alkylrest mit mindestens 8 Kohlenstoffatomen, R' einen Alkylenrest mit mindestens 2 Kohlenstoffatomen und R'' einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis(thioethylenglykol-2-ethylhexoat), Dioctylzinn-bis(thioethylen-glykollaurat), Dioctylzinn-bis(thiolatoessigsäure-2-ethylhexylester), Dioctylzinn-bis(thiolatoessigsäurehexylester) und Dioctylzinn-bis(thiolatoessigsäurelaurylester). Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR')₂ oder RSn(SR')₃, in denen R und R' Alkylgruppen darstellen, die 4 bis 8 Kohlenstoffatome bei R sowie 4 bis 12 Kohlenstoffatome bei R' enthalten und R' außerdem die Reste -R''COOR''' und -R''OCOR''' bedeuten kann, in denen R'' Alkylgruppen mit 1 bis 6 Kohlenstoffatomen und R''' Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinn-bis(thioethylenglykol-2-ethyl-hexoat) und Dibutylzinn-bis(thioethylenglykollaurat).
   Die organischen Metallverbindungen können als Katalysatoren einzeln oder in Form von Katalysatorkombinationen eingesetzt werden. Als äußerst vorteilhaft hat sich eine Kombination erwiesen, die besteht aus 94 Gew.-% Di-n-octylzinn-bis-(2-ethylhexylthioglykolat) und 6 Gew.-% Mono-n-octylzinn-tris-(2-ethylhexylthioglykolat).
   Die organischen Metallverbindungen können ferner in Kombination mit stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin,N-Methyl-, N-Ethyl-, N-Cyclohexylmorpholin, N,N,N',N'-Tetramethyl-ethylendiamin, N,N,N',N'-Tetramethyl-butandiamin, N,N,N',N'-Tetramethyl-diaminodicyclohexylmethan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Insbesondere bei Verwendung eines Polyisocyanatüberschusses kommen als Katalysatoren ferner in Betracht:
   Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
f) Wesentliches Merkmal der vorliegenden Erfindung ist die Verwendung mindestens eines Zusatzstoffes (f), ausgewählt aus der Gruppe der Homopolymeren (f1), Copolymeren (f2) und Copolymeren (f3) sowie den entsprechenden Pfropfcopolymeren (f3) oder einer Mischung aus mindestens 2 der genannten Polymeren.
   Zur Herstellung der Homopolymeren (f1), Copolymeren (f2) und (f3) und Pfropfcopolymeren (f3) eignen sich monoethylenisch ungesättigte Monocarbonsäuren, vorzugsweise solche mit 3 bis 10 C-Atomen, deren Alkali- und/oder Ammoniumsalze. Als monoethylenisch ungesättigte Monocarbonsäuren und deren Salze seien beispielhaft genannt: Acrylsäure, Methacrylsäure, Dimethylacrylsäure, Ethylacrylsäure, Allylessigsäure und Vinylessigsäure sowie z.B. die Natrium-, Kalium- und Ammoniumsalze oder Mischungen aus mindestens zwei der genannten Monomeren.
   Vorzugsweise verwendet werden Acrylsäure, Methacrylsäure und ihre Alkalisalze.
   Als monoethylenisch ungesättigte Dicarbonsäuren, vorzugsweise solchen mit 4 bis 8 C-Atomen, und insbesondere 4 bis 6 C-Atomen, kommen beispielsweise in Betracht:
   Maleinsäure, Fumarsäure, Itaconsäure, Mesaconsäure, Methylenmalonsäure und Citraconsäure. Die ethylenisch ungesättigten Dicarbonsäuren können als freie Säuren oder in mit Alkalimetallbasen, Ammoniak oder Aminen partiell oder vollständig neutralisierter Form zur Bildung der Homopolymerisate (f1), Copolymerisate (f2) und (f3) und Pfropfcopolymerisate (f3) eingesetzt werden. Anstelle der freien Säuren können auch deren innere Anhydride wie z.B. Maleinsäureanhydrid, Itaconsäureanhydrid und Methylenmalonsäureanhydrid verwendet werden. Vorzugsweise verwendet werden als Monomere dieser Art: Maleinsäure, Maleinsäureanhydrid, Itaconsäure, Itaconsäureanhydrid und die Natrium-, Kalium- oder Ammoniumsalze der Maleinsäure oder Itaconsäure. Diese Salze sind beispielsweise in einfacher Weise erhältlich durch Neutralisation der genannten Dicarbonsäuren oder Anhydride in wäßriger Lösung mit Natronlauge, Kalilauge oder Ammoniak.
   Als carboxylgruppenfreie, monoethylenisch ungesättigte, mit den monoethylenisch ungesättigten Mono- und Dicarbonsäuren copolymerisierbare Monomere können beispielsweise Verwendung finden:
   Olefine wie z.B. Ethylen, Propylen, n-Butylen, Isobutylen und Diisobuten, Vinylalkylether, wie z.B. Vinylmethyl-, Vinylethyl-, Vinylpropyl-, Vinylisopropyl-, Vinylbutyl-, Vinylisobutyl- und Vinyl-tert. butylether, Vinylaromaten wie z.B. Styrol und α-Methylstyrol, Furan und 2-Methylfuran, Diketen, Acryl- und Methacrylsäurederivate, beispielsweise (Meth)acrylamid, (Meth)acrylnitril, Alkyl(meth)acrylate, wie z.B. Methyl(meth)acrylat, Ethyl(meth)acrylat, Propyl(meth)acrylat, Butyl(meth)acrylat, Isobutyl(meth)acrylat und Tert.-butyl(meth)acrylat, Hydroxyalkyl(meth)acrylate, wie z.B. Hydroxyethyl(meth)acrylat, Hydroxypropyl(meth)acrylat, Hydroxylbutyl(meth)acrylat und Hydroxyisobutyl(meth)acrylat, Vinylcarbonsäureester, wie z.B. Vinylformiat, Vinylacetat, Vinylbutyrat und Vinylpivalat und andere vinylgruppenhaltige Monomere wie z.B. N-Vinylpyrrolidon, N-Vinylcaprolactam, N-Vinylformamid, N-Vinylacetamid, N-Vinylmethylacetamid und N-Vinylimidazol.
   Wie bereits dargelegt wurde, können die als Zusatzstoff (f) verwendbaren Homopolymeren (f1) hergestellt werden durch Homopolymerisation von monoethylenisch ungesättigten Monocarbonsäuren oder ihren Salzen und monoethylenisch ungesättigten Dicarbonsäuren, ihren Salzen oder ihren Anhydriden.
   Die Copolymeren (f2) sind erhältlich durch Copolymerisation von
   f2i) monoethylenisch ungesättigten Monocarbonsäuren oder ihren Salzen oder monoethylenisch ungesättigten Dicarbonsäuren oder ihren Salzen oder ihren Anhydriden und
   f2ii) carboxylgruppenfreien, monoethylenisch ungesättigten, mit (f2i) copolymerisierbaren Monomeren.

   Die Copolymeren (f2) können bis zu 80 Gew.-%, bezogen auf das Gesamtgewicht, polymerisierte Einheiten der carboxylgruppenfreien Monomeren (f2ii) enthalten. Vorzugsweise beträgt ihr Anteil jedoch 1 bis 20 Gew.-%.
   Die Copolymeren (f3) sind erhältlich durch Copolymerisation von
   f3i) monoethylenisch ungesättigten Monocarbonsäuren und/oder ihren Salzen,
   f3ii) monoethylenisch ungesättigten Dicarbonsäuren und/oder ihren Salzen und/oder ihren Anhydriden und gegebenenfalls
   f3iii) carboxylgruppenfreien, monoethylenisch ungesättigten mit (f3i) und (f3ii) copolymerisierbaren Monomeren.

   Obgleich die Monomeren (f3i) und (f3ii) sowie gegebenenfalls (f3iii) in breiten Mengenverhältnissen, z.B. in Gewichtsmengen von 90:10: (0 bis 80) bis 10:90: (0 bis 80), variiert werden können, finden als Zusatzstoff (f) üblicherweise Copolymere (f3) Verwendung, die zweckmäßigerweise hergestellt werden durch Copolymerisation von, bezogen auf das Gesamtgewicht der Monomeren, das sich zu 100 Gew.-% addiert,
   f3i) 90 bis 40 Gew.-%, vorzugsweise 50 bis 80 Gew.-%, mindestens einer monoethylenisch ungesättigten Monocarbonsäure mit vorzugsweise 3 bis 10 C-Atomen oder ihres Salzes, insbesondere der Acrylsäure, Methacrylsäure und/oder Vinylessigsäure und/oder ihren Alkali- und/oder ihren Ammoniumsalzen,
   f3ii) 10 bis 60 Gew.-%, vorzugsweise 20 bis 50 Gew.-% mindestens einer monoethylenisch ungesättigten Dicarbonsäure mit 4 bis 8 C-Atomen, vorzugsweise 4 bis 6 C-Atomen, und/oder ihrer Salze und/oder ihrer inneren Anhydride, insbesondere Maleinsäure, Citraconsäure, Itaconsäure und/oder ihren Alkali- oder Ammoniumsalzen und/oder ihren inneren Anhydriden und
   f3iii) 0 bis 20 Gew.-%, vorzugsweise 1 bis 10 Gew.-% mindestens eines carboxylgruppenfreien, monoethylenisch ungesättigten, mit (f3i) und (f3ii) copolymerisierbaren Monomeren.

   Die Homopolymeren (f1) und Copolymeren (f2) und (f3) und Pfropfcopolymeren (f3) besitzen üblicherweise Molekulargewichte von 300 bis 5.000.000, vorzugsweise von 500 bis 1.000.000, wobei Molekulargewichte von 10.000 bis 150.000 für die Copolymeren insbesondere bevorzugt sind.
   Die Molekulargewichte der Homo- und (Pfropf)copolymeren wurden aus den Natriumsalzen nach der Methode der Gelpermeationschromatographie (GPC) mit wäßrigen Elutionsmitteln bestimmt. Die Eichung der Trennsäulen wurde durchgeführt mit breitverteilten Natriumpolyacrylatmischungen, deren integrale Molekulargewichtsverteilungskurven durch GPC-Laserlichtstreukopplung nach dem Eichprinzip von M.I.R. Cantow et al. bestimmt wurde (J. Polym. Sci., Part A-1, Vol. 5, Seiten 1391 bis 1394 (1967)), wobei die dort vorgeschlagene Konzentrationskorrektur nicht angewandt wurde (vgl. hierzu R. Brüssau, W. Goetz, W. Mächtle und I. Stölting "Characterization of Polyacrylate Samples", publiziert in Tenside Surfactants Detergents, 28, Heft 6, Seiten 396 bis 406, 1991).
   Als Zusatzstoff (f) insbesondere verwendet werden Copolymerisate (f3), die erhältlich sind durch Copolymerisation von, bezogen auf das Gesamtgewicht der Monomeren,
   f3i) 90 bis 10 Gew.-%, vorzugsweise 55 bis 45 Gew.-% Acrylsäure und/oder deren Alkalisalze und
   f3ii) 10 bis 90 Gew.-%, vorzugsweise 45 bis 55 Gew.-% Maleinsäureanhydrid, Maleinsäure und/oder deren Alkalisalze und die zweckmäßigerweise ein Molekulargewicht von 5.000 bis 1.000.000, vorzugsweise von 10.000 bis 150.000 besitzen.

   Als Zusatzstoff (f) verwendbar sind ferner Pfropfcopolymerisate, die erhältlich sind durch radikalisch initiierte Copolymerisation von Monomermischungen aus (f3i), (f3ii) und gegebenenfalls (f3iii) in Gegenwart von Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden oder chemisch modifizierten Mono-, Oligo- und Polysacchariden im Gewichtsverhältnis von (95 bis 20):(5 bis 80).
   Die erfindungsgemäß verwendbaren Homo- oder (Pfropf)copolymeren können Anhydridgruppen und/oder Säuregruppen aufweisen und/oder in Salzform vorliegen, wobei die Säuregruppen partiell oder vollständig mit Basen neutralisiert sein können. Als geeignete Basen finden vorzugsweise Alkalihydroxide, wie z.B. Kalium- und vorzugsweise Natriumhydroxid Verwendung. Verwendbar sind jedoch auch Amine und Ammoniak. Durch die Salzbildung kann die Löslichkeit der Homo- und (Pfropf)copolymeren verbessert werden.
   Die als Zusatzstoff (f) verwendbaren Homopolymeren (f1), Copolymeren (f2) und (f3) und Pfropfcopolymerisate (f3) können nach den bekannten Verfahren der Masse-, Lösungs-, Suspensions- und Pfropfpolymerisation hergestellt werden. Geeignete Verfahren zur Herstellung der Copolymeren und Pfropfcopolymeren werden beispielsweise in den EP-B-0 075 820 (US-A-5 175 361), EP-B-0 103 254, EP-B-0 106 111 (US-A-4 725 655), EP-B-0 106 991 und EP-B-0 441 197 (US-A-5 227 446) beschrieben. Der Gesamtinhalt dieser Patentpublikation ist als Bestandteil der Patentbeschreibung zu betrachten.
   Die als Zusatzstoff (f) verwendbaren Homo- und (Pfropf)copolymeren können beispielsweise in Form von Pulvern, Kugeln oder Granulaten mit Durchmessern von z.B. bis zu 5 mm verwendet werden. Pulverförmige Homo- und (Pfropf)copolymere, z.B. solche mit Partikeldurchmesser bis zu 50 µm können beispielsweise durch Fällungspolymerisation erhalten werden und fallen nach der Trocknung, z.B. in Schaufeltrocknern, als sehr feine Pulver an. Aus wäßrigen Polymerisatlösungen können z.B. durch Sprühtrocknung in einfacher Weise Pulver mit Teilchendurchmesser von z.B. 20 bis 300 µm und durch Trocknung in einer Wirbelschicht Granulate mit einem Durchmesser von z.B. 500 µm bis 5 mm hergestellt werden. Kugeln mit einem Teilchendurchmesser von z.B. 100 µm bis 1,5 mm können beispielsweise durch Suspensionspolymerisation erhalten werden.
   Die erfindungsgemäß verwendbaren Homo- und (Pfropf)copolymeren können je nach Einsatzzweck im wesentlichen wasserfrei sein oder vorzugsweise einen Wassergehalt z.B. von 0,01 bis 15 Gew.-%, vorzugsweise von 0,5 bis 12 Gew.-% aufweisen. Zur Herstellung der Urethangruppen enthaltenden Formkörper werden sie in Abhängigkeit von ihrem Wassergehalt zweckmäßigerweise in einer Menge von 0,05 bis 20 Gew.-%, vorzugsweise von 1 bis 15 Gew.-%, bezogen auf das Gewicht der höhermolekularen Verbindungen (b) eingesetzt. Mischungen aus Wasser und mindestens einem Zusatzstoff (f) aus der Gruppe der Homopolymeren (f1), Copolymeren (f2) und (f3) und Pfropfcopolymeren (f3) haben sich als Treibmittel zur Formkörperherstellung bewährt und werden hierfür bevorzugt verwendet.
   Zusätzlich zu den erfindungswesentlichen Homopolymeren und/oder (Pfropf)copolymeren können zur Herstellung der FCKW-freien, Urethangruppen enthaltenden, vorzugsweise halbharten und harten Formkörper mit einem zelligen Kern, einer verdichteten Randzone und einer im wesentlichen porenfreien, glatten Oberfläche gegebenenfalls auch noch andere Zusatzstoff (f) mitverwendet werden. Als andere Zusatzstoffe (f) genannt seien beispielsweise mikroporöse Aktivkohle und/oder mikroporöse Kohlenstoffmolekularsiebe gemäß US-A-5 254 597, kristalline, mikroporöse Molekularsiebe und/oder kristallines Siliciumoxid gemäß US-A-5 110 834, amorphe mikroporöse Kieselgel gemäß EP-A-0 513 573, Konzentrate aus Polyhydroxylverbindungen und Ammoniumbicarbonat und/oder Salze aus Aminen und Kohlendioxid, oberflächenaktive Substanzen, Schaumstabilisatoren, Zellregler, Gleitmittel, Trennmittel, Füllstoffe, Farbstoffe, Pigmente, Flammschutzmittel, Hydrolyseschutzmittel, fungistatisch und bakteriostatisch wirkende Substanzen oder Mischungen davon.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe, wie z.B. silikatische Mineralien, beispielsweise Schichtsilikate wie Antigorit, Serpentin, Hornblenden, Amphibole, Chrisotil, Talkum, Wollastonit, Glimmer und synthetische Silikate wie z.B. Magnesiumaluminiumsilikat (Transpafill®); Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid und Zinksulfid. Als organische Füllstoffe kommen beispielsweise in Betracht: Ruß, Melamin, Kollophonium, Cyclopentadienylharze und Pfropfpolymerisate.
   Als Füllstoffe und/oder Verstärkungsmittel vorzüglich bewährt haben sich und werden daher zweckmäßigerweise bevorzugt verwendet: Glaskugeln, Kurzglasfasern, Glasmatten, Vliese aus Glas- oder Kunststoffasern, Endlosfasern aus Glas oder Kunststoffen wie z.B. Polyestern, Polyamiden, thermoplastischen Polyurethanen und Aramid, Metallfasern und Naturstoffasern, wie z.B. Cellulose, Schilf und Sisal. Die Endlosfasern können auch in kurzgeschnittener Form eingesetzt werden. Die Füllstoffe und Verstärkungsmittel können sowohl einzeln als auch in geeigneten Kombinationen untereinander oder miteinander eingesetzt werden.
   Die anorganischen und organischen Füllstoffe und/oder Verstärkungsmittel können der Reaktionsmischung einverleibt werden, wobei sie, sofern sie überhaupt mitverwendet werden, vorteilhafterweise in einer Menge von 0,5 bis 50 Gew.-%, vorzugsweise 1 bis 40 Gew.-%, bezogen auf das Gewicht der Komponenten (a) bis (c) eingesetzt werden. Matten und Vliese aus Fasern können in gleichen Mengen in das leere Formwerkzeug eingelegt werden.
   Geeignete Flammschutzmittel sind beispielsweise Trikresylphosphat, Tris-(-2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie gegebenenfalls modifizierter roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/oder Stärke zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Nähere Angaben über die oben genannten anderen üblichen Hilfs- und Zusatzstoffe sind der Fachliteratur, beispielsweise der Monographie von J.H. Saunders und K.C.Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Formkörper werden die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,50:1, vorzugsweise 0,95 bis 1,15:1 und insbesondere 0,9 bis 1,1:1 beträgt.

Die erfindungsgemäßen Urethangruppen enthaltenden, vorzugsweise halbharten oder harten Formkörper können nach dem Prepolymer oder vorzugsweise nach dem one shot-Verfahren mit Hilfe der Niederdruck-Technik oder der Hochdrucktechnik in geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden. Aufgrund der guten Fließfähigkeit und verbesserten Verarbeitbarkeit der Formulierungen werden die Formkörper jedoch insbesondere mittels der Reaktionsspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponentenverfahren zu arbeiten und die Aufbaukomponenten (b), (d), (e), (f) und gegebenenfalls (c) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 80°C, vorzugsweise von 25 bis 55°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Die Verdichtungsgrade liegen im Bereich von 1,1 bis 8,3, vorzugsweise von 1,8 bis 6 und insbesondere von 2,0 bis 2,5.

Die Menge des in das Formwerkzeug eingebrachten Reaktionsgemisches wird vorteilhafterweise so bemessen, daß die erhaltenen Formkörper eine Gesamtdichte von 0,06 bis 0,6 g/cm³ , vorzugsweise eine Gesamtdichte von 0,15 bis 0,3 g/cm³ aufweisen.

Die nach dem erfindungsgemäßen Verfahren hergestellten Integralschaumstoff-Formkörper finden beispielsweise Verwendung in der Automobilindustrie als Sicherheitsverkleidungen, in Form von Sandwichelementen zur Herstellung von Cockpits für Kraftfahrzeuge, vorzugsweise Lastkraftwagen, und andere Verkehrsmittel, in Form von verstärkten Formkörpern als tragende Elemente im Verkehrsmittelbau, z.B. als Karosserieteile, in der Freizeitindustrie als Sonnenliegen, in der Bauindustrie als Fensterrahmen und in der Möbel- und Maschinenindustrie als Gehäuseteile.

### Beispiele

### Beispiel 1

A-Komponente: Mischung, die bestand aus
   - 8,4 Gew.-Teilen: eines mit 1,2-Propylen-glykol gestarteten Polyoxypropylen-glykols mit der OH-Zahl 56,
   - 39,7 Gew.-Teilen: eines mit Ethylendiamin gestarteten Polyoxypropylen-polyols mit der OH-Zahl 480,
   - 5,2 Gew.-Teilen: eines Trimethylolpropan-1,2-Propylenoxidaddukts mit der OH-Zahl von 940,
   - 21,0 Gew.-Teilen: einer Lösung, die enthielt
   42,8 Gew.-Teile eines Trimethylolpropan-1,2-Propylenoxidaddukts mit der OH-Zahl von 940,
   42,8 Gew.-Teilen eines mit Glycerin gestarteten Polyoxypropylen-polyols mit der OH-Zahl 570 und 14,4 Gew.-Teilen tertiär Butanol,
   - 2,5 Gew.-Teilen: eines Umsetzungsprodukts aus Ölsäure und Triethanolamin,
   - 2,0 Gew.-Teilen: eines Schaumstabilisators auf Silikonbasis (Tegostab® B 8418 der Goldschmidt AG, Essen),
   - 0,5 Gew.-Teilen: 1-Methylimidazol,
   - 0,7 Gew.-Teilen: Wasser und
   - 20,0 Gew.-Teilen: eines Konzentrats, das enthielt
   50 Gew.-Teile eines mit 1,2-Propylen-glykol gestarteten Polyoxypropylen-glykols mit der OH-Zahl 56 und
   50 Gew.-Teile eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid.
B-Komponente: Mischung aus Diphenylmethan-diisocyanaten und Polyphenyl-polymethylen-polyisocyanaten (Roh-MDI) mit einem NCO-Gehalt von 31,0 Gew.-%.

100 Gew.-Teile der A-Komponente und 117,73 Gew.-Teile der B-Komponente wurden bei einer Komponententemperatur von 29°C in einer Hochdruckmaschine vom Typ Puromat®30 der Firma Elastogran GmbH, Geschäftsbereich Maschinenbau, Straßlach, gemischt. Die Luftbeladung betrug 22 Vol.-%. Die Reaktionsmischung wurde unter einem Druck von 150 bar mit einer Austragsleistungen von 250 g/sec. in ein auf 55 bis 60°C temperiertes metallisches Formwerkzeug mit den inneren Abmessungen 500x400x10 mm in einer solchen Menge eingebracht, daß sich nach dem Verschließen des Formwerkzeuges Verdichtungsgrade vom 2,5, 3,0, 4,0, 5,0 und 6,0 einstellten. Nach 4,5 Minuten wurden die gebildeten plattenförmigen PU-Formkörper, die einen zelligen Kern, eine kompakte Randzone und eine äußerst glänzende Oberfläche besaßen, entformt. Die PU-Formkörper besaßen in Abhängigkeit vom Verdichtungsgrad folgende Härten nach Shore D.

| | | | | | |
|---|---|---|---|---|---|
| Verdichtungsgrad | 2,5 | 3,0 | 4,0 | 5,0 | 6,0 |
| Härte, Shore-D | 42 | 49 | 63 | 70 | 70 |

Wurde die mit dem Puromat® 30 hergestellte Reaktionsmischung in einem offenen Becher aufschäumen gelassen, so wurden folgende physikalische Kenndaten gemessen:

| | |
|---|---|
| Startzeit [Sek]: | 9 |
| Abbindezeit [Sek]: | 25 |
| Steigzeit [Sek]: | 38 |
| Raumgewicht, freigeschäumt [g/l]: | 100. |

Wurden die Komponenten A und B mit einem Handruhrgerät intensiv gemischt und die Reaktionsmischung in einem offenen Becher aufschäumen gelassen, so wurden die folgenden physikalischen Kenndaten gemessen:

| | |
|---|---|
| Startzeit [Sek]: | 27 |
| Abbindezeit [Sek]: | 52 |
| Steigzeit [Sek]: | 83 |
| Raumgewicht, freigeschäumt [g/l]: | 120. |

### Beispiel 2

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875,
   - 11,5 Gew.-Teilen: Alkylepoxistearat (Edenol® B35 der Firma Henkel, Düsseldorf),
   - 3,0 Gew.-Teilen: eines Schaumstabilisators auf Silikonbasis (Tegostab® B 8418),
   - 0,5 Gew.-Teilen: Wasser,
   - 0,15 Gew.-Teilen: 1-Methylimidazol und
   - 10,0 Gew.-Teilen: eines Copolymerisats mit einem Molekulargewicht von 50.000 und einem Wassergehalt von 9,9 Gew.-%, erhalten durch Copolymerisation einer Mischung aus 50 Gew.-% Natriummaleinat und 50 Gew.-% Acylsäure und anschließender vollständiger Neutralisation des erhaltenen Copolymeren mit Natriumhydroxid.
B-Komponente: analog Beispiel 1
   100 Gew.-Teile der A-Komponente und 100,02 Gew.-Teile der B-Komponente wurden bei einer Komponententemperatur von 23°C mit einem Intensivrührer gemischt. Die Reaktionsmischung wurde in ein auf 40°C temperiertes Formwerkzeug mit den inneren Abmessungen 200x200x40 mm, dessen Innenfläche mit dem Trennmittel PUR A1 (der Firma PURA International Hapke GmbH und Co. KG, Norderstedt) beschichtet war, eingefüllt.

Nach einer Standzeit von 3 Minuten wurde das geschlossene Formwerkzeug geöffnet und die gebildete PU-Platte entformt.

Die PU-Platte besaß einen zelligen Kern, eine kompakte Randzone und eine glatte, sehr glänzende Oberfläche. Die Gesamtdichte betrug 248 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 87 |
| Steigzeit [Sek]: | 117 |
| Raumgewicht, freigeschäumt [g/l]: | 130,4. |

### Beispiel 3

A-Komponente: Mischung, die bestand aus
   - 26,2 Gew.-Teilen: eines mit 1,2-Propylen-glykol gestarteten Polyoxypropylen-glykols mit der OH-Zahl 56,
   - 32,3 Gew.-Teilen: eines mit Ethylendiamin gestarteten Polyoxypropylen-polyols mit der OH-Zahl 480,
   - 11,8 Gew.-Teilen: eines Trimethylolpropan-1,2-Propylenoxidaddukts mit der OH-Zahl von 940,
   - 10,8 Gew.-Teilen: Alkylepoxistearat (Edenol®B35 der Firma Henkel, Düsseldorf),
   - 3,0 Gew.-Teilen: eines Schaumstabilisators auf Silikonbasis (Tegostab® B8418),
   - 0,75 Gew.-Teilen: Wasser,
   - 0,15 Gew.-Teilen: 1-Methylimidazol,
   - 5,0 Gew.-Teilen: eines Copolymerisats mit einem Molekulargewicht von 50.000, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 10 Gew.-Teilen: einer Lösung, die enthielt
   42,8 Gew.-Teile eines Trimethylol-propan-1,2-Propylenoxidaddukts mit der OH-Zahl von 875,
   42,8 Gew.-Teile eines mit Glycerin gestarteten Polyoxypropylen-polyols mit der OH-Zahl 570 und
   14,4 Gew.-Teile tertiär Butanol.
B-Komponente: analog Beispiel 1
   100 Gew.-Teile der A-Komponente und 100,24 Gew.-Teile der B-Komponente wurden analog den Angaben des Beispiels 2 zu einem PU-Formkörper verschäumt.

Die PU-Platte besaß einen zelligen Kern, eine kompakte Randzone und eine glatte, sehr glänzende Oberfläche. Die Gesamtdichte betrug 245 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 95 |
| Steigzeit [Sek]: | 127 |
| Raumgewicht, freigeschäumt [g/l]: | 123,8. |

### Beispiel 4

A-Komponente: Mischung, die bestand aus
   - 21,0 Gew.-Teilen: eines mit 1,2-Propylen-glykol gestarteten Polyoxypropylen-glykols mit der OH-Zahl 56,
   - 26,1 Gew.-Teilen: eines mit Ethylendiamin gestarteten Polyoxypropylen-polyols mit der OH-Zahl 480,
   - 9,4 Gew.-Teilen: eines Trimethylolpropan-1,2-Propylenoxidaddukts mit der OH-Zahl von 875,
   - 8,5 Gew.-Teilen: Alkylepoxistearat (Edenol® B 35 der Firma Henkel, Düsseldorf),
   - 2,3 Gew.-Teilen: eines Schaumstabilisators auf Silikonbasis (Tegostab® B 8418),
   - 0,6 Gew.-Teilen: Wasser,
   - 0,1 Gew.-Teilen: 1-Methylimidazol,
   - 4,0 Gew.-Teilen: eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 8,0 Gew.-Teilen: einer Lösung, die enthielt
   42,8 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 570 und 14,4 Gew.-Teile tertiär Butanol,
   und
   - 20 Gew.-Teilen: Kurzglasfasern mit einer Länge von 200 µm.
B-Komponente: analog Beispiel 1
   100 Gew.-Teile der A-Komponente und 100,54 Gew.-Teile der B-Komponente wurden analog den Angaben des Beispiels 2 zu einem PU-Formkörper verschäumt.

Die PU-Platte besaß einen zelligen Kern, eine kompakte Randzone mit einer Dicke von ca. 2 mm und eine glatte, sehr glänzende Oberfläche. Die Gesamtdichte betrug 258 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 108 |
| Steigzeit [Sek]: | 152 |
| Raumgewicht, freigeschäumt [g/l]: | 130. |

### Beispiel 5

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875,
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol und
   - 10,0 Gew.-Teilen: eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid.
B-Komponente: analog Beispiel 1.

4 Lagen Glasmatten zu je 450 g/m² wurden in das in Beispiel 2 beschriebene und mit Trennmittel versehene Formwerkzeug eingelegt.

Anschließend wurden 100 Gew.-Teile der A-Komponente und 100,02 Gew.-Teile der B-Komponente analog den Angaben des Beispiels 2 gemischt und zu einem Formkörper verschäumt.

Die erhaltene PU-Formplatte besaß einen zelligen Kern, eine kompakte Randzone mit einer Dicke von ca. 2 mm und eine absolut glatte Oberfläche. Die Gesamtdichte betrug 330 g/l.

Wurde die Reaktionsmischung in Abwesenheit der Glasmatten in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 95 |
| Steigzeit [Sek]: | 90 |
| Raumgewicht, freigeschäumt [g/l]: | 130. |

### Beispiel 6

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875,
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,5 Gew.-Teilen: Wasser,
   - 0,15 Gew.-Teilen: 1-Methylimidazol,
   - 10,0 Gew.-Teilen: eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 20 Gew.-Teilen: Kurzglasfasern mit einer Länge von 200 µm.
B-Komponente: analog Beispiel 1.

100 Gew.-Teile der A-Komponente und 100,02 Gew.-Teile der B-Komponente wurden analog den Angaben des Beispiels 2 zu einem PU-Formkörper verschäumt.

Die PU-Platte besaß einen zelligen Kern und eine kompakte Randzone mit einer Dicke von ca. 2 mm. Die Gesamtdichte betrug 258 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 108 |
| Steigzeit [Sek]: | 152 |
| Raumgewicht, freigeschäumt [g/l]: | 130. |

### Beispiel 7

A-Komponente: Mischung, die bestand aus
   - 26,2 Gew.-Teilen: eines mit 1,2-Propylen-glykol gestarteten Polyoxypropylen-glykols mit der OH-Zahl 56,
   - 32,3 Gew.-Teilen: eines mit Ethylendiamin gestarteten Polyoxypropylen-polyols mit der OH-Zahl 480,
   - 11,8 Gew.-Teilen: eines Trimethylolpropan-1,2-Propylenoxidaddukts mit der OH-Zahl von 875,
   - 10,8 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol und
   - 5,0 Gew.-Teilen: eines Copolymerisats mit einem Molekulargewicht von 70.000 und einem Wassergehalt von 9,8 Gew.-%, erhalten durch Copolymerisation einer Mischung aus 30 Gew.-% Natriummaleinat und 70 Gew.-% Acrylsäure und anschließender vollständiger Neutralisation des Copolymeren mit Natriumhydroxid und
   - 10 Gew.-Teilen: einer Lösung, die enthielt
   48,0 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 570 und
   14,4 Gew.-Teile tertiär Butanol.
B-Komponente: analog Beispiel 1.

100 Gew.-Teile der A-Komponente und 100,24 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine sehr glatte, glänzende Oberfläche. Die Gesamtdichte betrug 230 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 98 |
| Steigzeit [Sek]: | 138 |
| Raumgewicht, freigeschäumt [g/l]: | 100,8. |

### Beispiel 8

A-Komponente: Mischung, die bestand aus
   - 1,2 Gew.-Teilen: eines mit Glycerin gestarteten Polyoxypropylen-glykols mit der OH-Zahl 400,
   - 22,0 Gew.-Teilen: eines mit Ethylendiamin gestarteten Polyoxypropylen-polyols mit der OH-Zahl 480,
   - 22,0 Gew.-Teilen: eines epoxidierten Fettsäureesters (Edenol® B33 der Firma Henkel, Düsseldorf),
   - 20,0 Gew.-Teilen: eines mit 1,2-Propylen-glykol gestarteten Polyoxypropylen(81,5 Gew.-%)-polyoxyethylen (18,5 Gew.-)-glykols mit der OH-Zahl 29,
   - 17,5 Gew.-Teilen: eines Trimethylolpropan-1,2-Propylenoxidaddukts mit der OH-Zahl von 875,
   - 0,8 Gew.-Teilen: eines Schaumstabilisators auf Silikonbasis (Tegostab® B 8418),
   - 0,75 Gew.-Teilen: Wasser,
   - 0,70 Gew.-Teilen: 1-Methylimidazol,
   - 5,0 Gew.-Teilen: eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 10 Gew.-Teilen: einer Lösung, die enthielt
   48,0 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 570 und
   14,4 Gew.-Teile tertiär Butanol.
B-Komponente: analog Beispiel 1.

100 Gew.-Teile der A-Komponente und 100,24 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine absolut glatte Oberfläche. Die Gesamtdichte betrug 224,3 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 98 |
| Steigzeit [Sek]: | 138 |
| Raumgewicht, freigeschäumt [g/l]: | 100,8. |

### Beispiel 9

A-Komponente: Mischung, die bestand aus
   - 2,75 Gew.-Teilen: eines mit Glycerin gestarteten Polyoxypropylen-polyol mit der OH-Zahl 400,
   - 22,0 Gew.-Teilen: eines mit Ethylendiamin gestarteten Polyoxypropylen-polyols mit der OH-Zahl 480,
   - 22,0 Gew.-Teilen: eines epoxidierten Fettsäureesters (Edenol® B33 der Firma Henkel, Düsseldorf),
   - 20,0 Gew.-Teilen: eines Polyoxypropylen-glykols mit der OH-Zahl 56,
   - 16,0 Gew.-Teilen: eines Trimethylolpropan-1,2-Propylenoxidaddukts mit der OH-Zahl von 875,
   - 0,8 Gew.-Teilen: eines Schaumstabilisators auf Silikonbasis (Tegostab® B 8418),
   - 0,75 Gew.-Teilen: Wasser,
   - 0,70 Gew.-Teilen: 1-Methylimidazol,
   - 5,0 Gew.-Teilen: eines Copolymerisats mit einem Molekulargewicht von 50.000 und einem Wassergehalt von 9,8 Gew.-%, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 10 Gew.-Teilen: einer Lösung, die enthielt 48,0 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 570 und
   14,4 Gew.-Teile tertiär Butanol.
B-Komponente: analog Beispiel 1
   100 Gew.-Teile der A-Komponente und 100,24 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine absolut glatte Oberfläche. Die Gesamtdichte des Formkörpers betrug 233,1 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 98 |
| Steigzeit [Sek]: | 138 |
| Raumgewicht, freigeschäumt [g/l]: | 110. |

### Beispiel 10

A-Komponente: Mischung, die bestand aus
   - 2,75 Gew.-Teilen: eines mit Glycerin gestarteten Polyoxypropylen-polyol mit der OH-Zahl 400,
   - 22,0 Gew.-Teilen: eines mit Ethylendiamin gestarteten Polyoxypropylen-polyols mit der OH-Zahl 480,
   - 22,0 Gew.-Teilen: eines epoxidierten Fettsäureesters (Edenol® B33 der Firma Henkel, Düsseldorf),
   - 20,0 Gew.-Teilen: eines Polyoxytetramethylen-glykols mit der OH-Zahl 56,
   - 16,0 Gew.-Teilen: eines Trimethylolpropan-1,2-Propylenoxidaddukts mit der OH-Zahl von 875,
   - 0,8 Gew.-Teilen: eines Schaumstabilisators auf Silikonbasis (Tegostab® B 8418),
   - 0,70 Gew.-Teilen: 1-Methylimidazol,
   - 5,0 Gew.-Teilen: eines Copolymerisats mit einem Molekulargewicht von 50.000, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid und
   - 10 Gew.-Teilen: einer Lösung, die enthielt
   48,0 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 875 und
   14,4 Gew.-Teilen tertiär Butanol.
B-Komponente: analog Beispiel 1
   100 Gew.-Teile der A-Komponente und 100,24 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone und eine glatte Oberfläche. Die Gesamtdichte des Formkörpers betrug 732 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 98 |
| Steigzeit [Sek]: | 110 |
| Raumgewicht, freigeschäumt [g/l]: | 110. |

### Beispiel 11

A-Komponente: Mischung, die bestand aus
   - 27,8 Gew.-Teilen: eines mit 1,2-Propylen-glykol gestarteten Polyoxypropylen-glykols mit der OH-Zahl 56,
   - 31,65 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,3 Gew.-Teilen: Wasser,
   - 0,3 Gew.-Teilen: 1-Methylimidazol,
   - 10,0 Gew.-Teilen: eines Copolymerisats mit einem Molekulargewicht von 50.000, erhalten durch Copolymerisation einer Mischung aus 50 Gew.-% Natriummaleinat und 50 Gew.-% Acrylsäure, jeweils bezogen auf das Gesamtgewicht der Mischung und anschließender vollständiger Neutralisation der erhaltenen Copolymeren mit Natriumhydroxid und
   - 3 Gew.-Teilen: eines Konzentrats, das bestand aus
   50 Gew.-Teilen eines mit 1,2-Propylen-glykol gestarteten Polyoxypropylen-glykols mit der OH-Zahl von 56 und
   50 Gew.-Teilen Ammoniumbicarbonat.
B-Komponente: analog Beispiel 1
   100 Gew.-Teile der A-Komponente und 88,21 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine glänzende glatte Oberfläche. Die Gesamtdichte des Formkörpers betrug 221,0 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 38 |
| Abbindezeit [Sek]: | 85 |
| Steigzeit [Sek]: | 122 |
| Raumgewicht, freigeschäumt [g/l]: | 151. |

### Beispiel 12

A-Komponente: Mischung, die bestand aus
   - 26,20 Gew.-Teilen: eines mit 1,2-Propylen-glykol gestarteten Polyoxypropylen-glykols mit der OH-Zahl 56,
   - 40,5 Gew.-Teilen: eines mit Ethylendiamin gestarteten Polyoxypropylen-polyols mit der OH-Zahl 480,
   - 11,8 Gew.-Teilen: eines Trimethylolpropan-1,2-Propylenoxidaddukts mit der OH-Zahl von 875
   - 10,8 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 1,8 Gew.-Teilen: tert.-Butyl-methylether,
   - 0,75 Gew.-Teilen: Wasser,
   - 0,15 Gew.-Teilen: 1-Methylimidazol und
   - 5,0 Gew.-Teilen: eines Copolymerisats mit einem Molekulargewicht von 50.000, erhalten durch Copolymerisation einer Mischung aus 50 Gew.-% Natriummaleinat und 50 Gew.-% Acrylsäure und anschließende vollständige Neutralisation des erhaltenen Copolymeren mit Natriumhydroxid.
B-Komponente: analog Beispiel 1
   100 Gew.-Teile der A-Komponente und 93,65 Gew.-Teile der B-Komponente wurden analog den Angaben des Beispiels 2 zu einem PU-Formkörper verschäumt.

Die erhaltene PU-Formplatte besaß einen zelligen Kern, eine stark verdichtete Randzone und eine extrem glänzende Oberfläche. Die Gesamtdichte des Formkörpers betrug 254 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 73 |
| Steigzeit [Sek]: | 111 |
| Raumgewicht, freigeschäumt [g/l]: | 124. |

### Beispiel 13

A-Komponente: Mischung, die bestand aus
   - 26,20 Gew.-Teilen: eines mit 1,2-Propylen-glykol gestarteten Polyoxypropylen-glykols mit der OH-Zahl 56,
   - 41,6 Gew.-Teilen: eines mit Ethylendiamin gestarteten Polyoxypropylen-polyols mit der OH-Zahl 480,
   - 11,8 Gew.-Teilen: eines Trimethylolpropan-1,2-Propylenoxidaddukts mit der OH-Zahl von 875,
   - 10,8 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,70 Gew.-Teilen: n-Pentan,
   - 0,15 Gew.-Teilen: 1-Methylimidazol und
   - 5,0 Gew.-Teilen: eines Copolymerisats mit einem Molekulargewicht von 50.000, erhalten durch Copolymerisation einer Mischung aus 50 Gew.-% Natriummaleinat und 50 Gew.-% Acrylsäure und anschließender vollständiger Neutralisation des erhaltenen Copolymeren mit Natriumhydroxid.
B-Komponente: analog Beispiel 1
   100 Gew.-Teile der A-Komponente und 95,03 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone und eine glatte Oberfläche. Im Vergleich zu den mit tertiär Butanol oder tert.-Butyl-methylether in Verbindung mit Wasser als Treibmittel aufgeschäumten PU-Formkörpern war der Oberflächenglanz geringfügig schwächer ausgeprägt. Die Gesamtdichte des Formkörpers betrug 253 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 71 |
| Steigzeit [Sek]: | 107 |
| Raumgewicht, freigeschäumt [g/l]: | 120. |

### Beispiel 14

A-Komponente: Mischung, die bestand aus
   - 26,2 Gew.-Teilen: eines mit 1,2-Propylen-glykol gestarteten Polyoxypropylen-glykols mit der OH-Zahl 56,
   - 32,3 Gew.-Teilen: eines mit Ethylendiamin gestarteten Polyoxypropylen-polyols mit der OH-Zahl 480,
   - 11,8 Gew.-Teilen: eines Trimethylolpropan-1,2-Propylenoxidaddukts mit der OH-Zahl von 875
   - 10,8 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol,
   - 5,0 Gew.-Teilen: eines Copolymerisats mit einem Molekulargewicht von 12.000 und einem Wassergehalt von 9,3 Gew.-%, erhalten durch Copolymerisation einer Mischung aus 46,6 Gew.-Teilen Maleinsäureanhydrid und 53,4 Gew.-Teilen Diisobutylen und anschließender Neutralisation von 75 % der Anhydridgruppen mit Natriumhydroxid und
   - 10,0 Gew.-Teilen: einer Lösung, die enthielt
   48,0 Gew.-Teile eines Trimethylolpropan-1,2-Propylenoxidaddukts mit der OH-Zahl von 875,
   42,8 Gew.-Teile eines mit Glycerin gestarteten Polyoxypropylen-polyols mit der OH-Zahl 570 und
   14,4 Gew.-Teile tertiär Butanol.
B-Komponente: analog Beispiel 1.

100 Gew.-Teile der A-Komponente und 100,24 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine sehr glatte Oberfläche. Die Gesamtdichte des Formkörpers betrug 255 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 15 |
| Abbindezeit [Sek]: | 92 |
| Steigzeit [Sek]: | 124 |
| Raumgewicht, freigeschäumt [g/l]: | 120. |

### Beispiel 15

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875,
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol und
   - 10 Gew.-Teilen: eines Copolymerisats mit einem Molekulargewicht von 12.000 und einem Wassergehalt von 9,3 Gew.-%, erhalten durch Copolymerisation einer Mischung aus
   46,6 Gew.-Teilen Maleinsäureanhydrid und 53,4 Gew.-Teilen Diisobutylen und anschließender Neutralisation von 75 % der Anhydridgruppen mit Natriumhydroxid.
B-Komponente: analog Beispiel 1.

100 Gew.-Teile der A-Komponente und 100,02 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine sehr glatte Oberfläche. Die Gesamtdichte des Formkörpers betrug 255 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 35 |
| Abbindezeit [Sek]: | 80 |
| Steigzeit [Sek]: | 120 |
| Raumgewicht, freigeschäumt [g/l]: | 138. |

### Beispiel 16

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol und
   - 10 Gew.-Teilen: eines Copolymerisats mit einem Molekulargewicht von 12.000 und einem Wassergehalt von 5,7 Gew.-%, erhalten durch Copolymerisation einer Mischung aus
   46,6 Gew.-Teilen Maleinsäureanhydrid und 53,4 Gew.-Teilen Diisobutylen.
B-Komponente: analog Beispiel 1.

100 Gew.-Teile der A-Komponente und 100,02 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine glänzende, glatte Oberfläche. Die Gesamtdichte des Formkörpers betrug 255 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 36 |
| Abbindezeit [Sek]: | 82 |
| Steigzeit [Sek]: | 117 |
| Raumgewicht, freigeschäumt [g/l]: | 132,7. |

### Beispiel 17

A-Komponente: Mischung, die bestand aus
   - 27,8 Gew.-Teilen: eines mit 1,2-Propylen-glykol gestarteten Polyoxypropylen-glykols mit der OH-Zahl 56,
   - 34,2 Gew.-Teilen: eines mit Ethylendiamin gestarteten Polyoxypropylen-polyols mit der OH-Zahl 480,
   - 12,6 Gew.-Teilen: eines Trimethylolpropan-1,2-Propylenoxidaddukts mit der OH-Zahl von 875,
   - 11,5 Gew.-Teilen: Alkylepoxistearat (Edenol® B 35 der Firma Henkel, Düsseldorf),
   - 3,0 Gew.-Teilen: eines Schaumstabilisators auf Silikonbasis (Tegostab® B 8418),
   - 0,75 Gew.-Teilen: Wasser,
   - 0,15 Gew.-Teilen: 1-Methylimidazol und
   - 10 Gew.-Teilen: einer Oligomaleinsäure einem Molekulargewicht von 1200 und mit einem Wassergehalt von 6,3 Gew.-%.
B-Komponente: analog Beispiel 1.

100 Gew.-Teile der A-Komponente und 100,02 Gew.-Teile der B-Komponente wurden analog den Angaben des Beispiels 2 zu einem PU-Formkörper verschäumt.

Die erhaltene PU-Formplatte besaß einen zelligen Kern, eine kompakte Randzone mit einer Dicke von ca. 2 mm und eine glatte Oberfläche. Die Gesamtdichte des Formkörpers betrug 255 g/l.

Wurde die Reaktionsmischung in einen offenen Becher eingefüllt und dort frei aufschäumen gelassen, so wurden folgende physikalische Kenndaten gemessen:

| | |
|---|---|
| Startzeit [Sek]: | 35 |
| Abbindezeit [Sek]: | 80 |
| Steigzeit [Sek]: | 117 |
| Raumgewicht, freigeschäumt [g/l]: | 126,7. |

## Patentansprüche

1. Verfahren zur Herstellung von fluorchlorkohlenwasserstofffreien, Urethangruppen enthaltenden Formkörpern mit einem zelligen Kern und einer verdichteten Randzone durch Umsetzung von
a) organischen Polyisocyanaten, modifizierten organischen Polyisocyanaten oder Mischungen aus organischen und modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungsmitteln, Vernetzungsmitteln oder Mischungen aus Kettenverlängerungs- und Vernetzungsmitteln
in Gegenwart von
d) Treibmitteln
e) Katalysatoren, und
f) mindestens einem Zusatzstoff
in einem geschlossenen Formwerkzeug unter Verdichtung, dadurch gekennzeichnet, daß der Zusatzstoff (f) ausgewählt ist aus der Gruppe der
f1) Homopolymeren, die teilweise oder vollständig neutralisiert sind, erhältlich durch Polymerisation von monoethylenisch ungesättigten Monocarbonsäuren, Dicarbonsäuren oder ihren Salzen oder inneren Anhydriden,
f2) Copolymeren, die teilweise oder vollständig neutralisiert sind, erhältlich durch Copolymerisation von
f2i) monoethylenisch ungesättigten Monocarbonsäuren, Dicarbonsäuren oder ihren Salzen oder inneren Anhydriden und
f2ii) carboxylgruppenfreien, monoethylenisch ungesättigten mit (f2i) copolymerisierbaren Monomeren und
f3) Copolymeren, die teilweise oder vollständig neutralisiert sind, erhältlich durch Copolymerisation oder Pfropfcopolymerisation von
(f3i) monoethylenisch ungesättigten Monocarbonsäuren und/oder ihren Salzen,
(f3ii) monoethylenisch ungesättigten Dicarbonsäuren, ihren Salzen und/oder ihren inneren Anhydriden und
(f3iii) gegebenenfalls carboxylgruppenfreien, monoethylenisch ungesättigten, mit (f3i) und (f3ii) copolymerisierbaren Monomeren.

2. Verfahren nach Anspruch 1, dadurch gekennzeichnet, daß die monoethylenisch ungesättigten Monocarbonsäuren 3 bis 10 C-Atome und die monoethylenisch ungesättigten Dicarbonsäuren 4 bis 8 C-Atome besitzen.

3. Verfahren nach Anspruch 1 oder 2, dadurch gekennzeichnet, daß die Homopolymeren, Copolymeren oder Pfropfcopolymeren ein Molekulargewicht von 300 bis 5.000.000 besitzen.

4. Verfahren nach Anspruch 1, dadurch gekennzeichnet, daß man als Zusatzstoff (f) ein Copolymeres verwendet, erhältlich durch Copolymerisation von, bezogen auf das Gesamtgewicht der Monomeren,
f3i) 90 bis 40 Gew.-% mindestens einer monoethylenisch ungesättigten Monocarbonsäure mit 3 bis 10 C-Atomen oder ihres Salzes,
f3ii) 10 bis 60 Gew.-% mindestens einer monoethylenisch ungesättigten Dicarbonsäure mit 4 bis 8 C-Atomen, ihres Salzes und/oder ihres inneren Anhydrids und
f3iii) 0 bis 20 Gew.-% mindestens eines carboxylgruppenfreien, monoethylenisch ungesättigten, mit (f3i) und (f3ii) copolymerisierbaren Monomeren.

5. Verfahren nach Anspruch 1, dadurch gekennzeichnet, daß man als Zusatzstoff (f) ein Copolymeres verwendet, erhältlich durch Copolymerisation von, bezogen auf das Gesamtgewicht der Monomeren,
f3i) 90 bis 40 Gew.-% Acrylsäure, Methacrylsäure oder Vinylessigsäure, oder ihren Alkali- oder Ammoniumsalzen oder Mischungen davon,
f3ii) 10 bis 60 Gew.-% Maleinsäure, Citraconsäure, Itaconsäure oder ihren Alkali- oder Ammoniumsalzen oder ihren inneren Anhydriden oder Mischungen davon und
f3iii) 0 bis 20 Gew.-% mindestens eines carboxylgruppenfreien, monoethylenisch ungesättigten, mit (f3i) und (f3ii) copolymerisierbaren Monomeren.

6. Verfahren nach Anspruch 1, dadurch gekennzeichnet, daß man als Zusatzstoff (f) ein Copolymeres verwendet, erhältlich durch Copolymerisation von, bezogen auf das Gesamtgewicht der Monomeren,
f3i) 90 bis 10 Gew.-% Acrylsäure und/oder deren Alkalisalze und
f3ii) 10 bis 90 Gew.-% Maleinsäureanhydrid, Maleinsäure, deren Alkalisalze oder Mischungen davon.

7. Verfahren nach einem der Ansprüche 1 bis 6, dadurch gekennzeichnet, daß man den Zusatzstoff aus der Gruppe der Homopolymeren (f1), Copolymeren (f2) und/oder (Pfropf)copolymeren (f3) in einer Menge von 0,05 bis 20 Gew.-%, bezogen auf das Gewicht der höhermolekularen Verbindungen (b) verwendet.

8. Verfahren nach einem der Ansprüche 1 bis 7, dadurch gekennzeichnet, daß man als höhermolekulare Verbindungen (b) Polyhydroxylverbindungen mit einer Funktionalität von 2 bis 8 und einem Molekulargewicht von 400 bis 8500 verwendet.

9. Verfahren nach einem der Ansprüche 1 bis 7, dadurch gekennzeichnet, daß man als höhermolekulare Verbindungen (b) eine Mischung aus Polyhydroxylverbindungen mit einem Molekulargewicht von 400 bis 8500 verwendet, die mindestens eine difunktionelle Polyhydroxylverbindung enthält.

10. Verfahren nach einem der Ansprüche 1 bis 9, dadurch gekennzeichnet, daß man als Treibmittel (d) Wasser verwendet.

11. Verfahren nach einem der Ansprüche 1 bis 9, dadurch gekennzeichnet, daß man als Treibmittel eine Mischung aus Wasser und mindestens einem Zusatzstoff (f) aus der Gruppe der Homopolymeren (f1), Copolymeren (f2) und (Pfropf)copolymeren (f3) verwendet.
